# EUROPÄISCHE PATENTSCHRIFT

(11) **EP 3 054 812 B1**
(45) Veröffentlichungstag und Bekanntmachung des Hinweises auf die Patenterteilung: **25.07.2018**
(21) Anmeldenummer: 14786144.7
(22) Anmeldetag: 01.10.2014
(51) Int. Cl.: A47B 88/493

(54) **AUSZUGSFÜHRUNG FÜR BEWEGBARE MÖBELTEILE**
PULL-OUT GUIDE FOR MOVABLE FURNITURE PARTS
GUIDE D'EXTRACTION POUR ÉLÉMENTS DE MEUBLES MOBILES

(30) Priorität: 07.10.2013 DE 102013111076
(43) Veröffentlichungstag der Anmeldung: 17.08.2016
(73) Patentinhaber: Paul Hettich GmbH & Co. KG, 32278 Kirchlengern (DE)
(72) Erfinder: KÄTHLER, Andreas, 32278 Kirchlengern (DE); MEYER, Bernd, 32469 Petershagen (DE)
(74) Vertreter: Kleine, Hubertus
(86) Internationale Anmeldenummer: PCT/EP2014/071000
(87) Internationale Veröffentlichungsnummer: WO 2015/052047

(56) Entgegenhaltungen:
- EP-A1- 1 066 773
- CN-A- 102 273 834
- DE-A1- 4 204 067
- DE-U1-202009 003 883
- DE-U1-202009 004 867

## Beschreibung

Die Erfindung betrifft eine Auszugsführung für bewegbare Möbelteile, insbesondere Schubkästen, die als Unterflurauszugsführung ausgebildet ist. Die Auszugsführung weist eine Korpusschiene, eine C-förmige Mittelschiene und eine an dem Möbelteil befestigbare Laufschiene auf, wobei die C-förmige Mittelschiene nach innen weisende Wälzkörperlaufbahnen für zwischen der Mittelschiene und der Korpusschiene angeordnete rollenförmige Wälzkörper aufweist, sowie mindestens zwei durch einen horizontalen Abschnitt der Mittelschiene voneinander beabstandete nach außen weisende und geneigte äußere Wälzkörperlaufbahnen für zwischen der Mittelschiene und der Laufschiene angeordnete weitere rollenförmige Wälzkörper. An der C-förmigen Mittelschiene ist ein freier Schenkel ausgebildet, der die Korpusschiene teilweise umgreift, wobei an einer Innenseite des Schenkels eine weitere innere Wälzkörperlaufbahn für zwischen der Mittelschiene und der Korpusschiene angeordnete rollenförmige Wälzkörper ausgebildet ist. Die Korpusschiene weist dabei einen horizontalen Laufsteg auf mit zumindest einer nach unten gerichteten horizontalen Wälzkörperlaufbahn, wobei die rollenförmigen Wälzkörper zwischen der an dem Schenkel der Mittelschiene ausgebildeten weiteren inneren Wälzkörperlaufbahn und der nach unten gerichteten horizontalen Wälzkörperlaufbahn angeordnet sind

Auszugsführungen mit Korpus-, Mittel- und Laufschiene, also mit drei zueinander bewegbaren Führungsschienen, ermöglichen es, ein bewegbares Möbelteil, beispielsweise einen Schubkasten, auch als Schublade bezeichnet, oder einen Geräteträger o.ä. leichtgängig ausziehbar zu lagern und vollständig aus einem Möbelkorpus auszufahren. Auszugsführungen mit drei Führungsschienen werden daher auch als Vollauszüge bezeichnet. Als Wälzkörper werden bei Auszugsführungen im Möbelbereich häufig Kugeln eingesetzt, die auf hohlkehlförmigen Laufbahnen abrollen. Bei der Verwendung von Kugeln als Wälzkörper besteht zwischen Kugel- und Laufbahn meist nur ein punktförmiger Kontakt, durch den bei stärkerer Belastung der Auszugsführung die Laufbahn beschädigt werden kann. Für Auszugsführungen, die für eine höhere Last ausgelegt sind, können vorteilhaft die eingangs genannten rollenförmigen Wälzkörper, beispielsweise zylindrische oder tonnenförmige Wälzkörper verwendet werden, bei denen im wesentlichen die gesamte Länge der Rollen zur Kraftübertragung auf die Lauffläche, auch Laufbahn genannt, zur Verfügung steht.

Die Druckschrift EP 1 066 773 A1 beschreibt eine Vollauszugsführung mit Korpusschiene, Mittelschiene und Laufschiene, bei der die Korpusschiene und die Laufschiene jeweils ein dreieckiges Profil aufweisen, wobei Wälzkörper auf äußeren Laufflächen des dreieckigen Profils ablaufen. Die Mittelschiene ist aus zwei übereinander angeordneten und miteinander verbundenen C-förmigen Profilen gebildet, die jeweils die Korpus- bzw. Laufschiene und die zugeordneten Wälzkörper umgreifen. Diese Anordnung kann ein hohes Kippmoment aufnehmen, weist jedoch eine relativ große Bauhöhe auf.

Aus der Druckschrift DE 42 04 067 A1 ist eine Vollauszugsführung mit drei zueinander bewegbaren Führungsschienen bekannt, bei der eine Mittelschiene C-förmig ausgebildet ist und jeweils zwei nach innen weisende und zwei nach außen weisende Wälzkörperlaufbahnen für rollenförmige Wälzkörper aufweist. Die nach innen zur Korpusschiene weisenden Wälzkörperlaufbahnen sind ebenso wie die nach außen zur Laufschiene weisenden Wälzkörperlaufbahnen paarweise zueinander um etwa 90 Grad geneigt ausgebildet. Eine Wälzkörperführung mit einer derartigen Geometrie wird auch als Prismenführung bezeichnet. Sie ist in der Lage, mit nur zwei Wälzkörperlaufbahnen sowohl eine vertikal nach unten wirkende Kraft aufzunehmen, als auch eine Seitenführung zu bieten. Die sich aus der geneigten Anordnung der Wälzkörperlaufbahn ergebende, ebenfalls geneigte Ausrichtung der Drehachsen der Wälzkörper führt auch bei größerem Wälzkörperdurchmesser zu einem geringen vertikalen Abstand der Führungsschienen untereinander, wodurch sich eine geringe vertikale Bauhöhe der Auszugsführung ergibt.

Bei der Auszugsführung der Druckschrift DE 42 04 067 A1 sind Endabschnitte der Führungsschienen jeweils so umgekantet, dass Stirnflächen der rollenförmigen Wälzkörper zumindest teilweise umgriffen werden. Auf diese Weise kann auch in axialer Richtung der rollenförmigen Wälzkörper eine Kraftübertragung zwischen den einzelnen Führungsschienen erzielt werden, durch die zum einen verhindert wird, dass Mittel- bzw. Laufschiene nach oben von der Korpusschiene abgehoben werden können, und zum anderen ermöglicht wird, dass ein auf die Führungsschiene wirkendes Kippmoment bei herausgezogenem Möbelteil bis zu einem gewissen Maße aufgenommen wird. Bei schweren Lasten kann das Kippmoment aufgrund der axial durch die Wälzkörper übertragenen Kräfte jedoch zu einem Aufbiegen der Profile der Führungsschienen führen, wodurch die Belastbarkeit der Auszugsführung eingeschränkt ist.

Eine Auszugsführung der eingangs genannten Art ist aus der Druckschrift CN 102 273 834 A bekannt. Bei der dort beschriebenen Auszugsführung wird ein Kippmoment durch die zwischen dem freien Schenkel der Mittelschiene und der Korpusschiene angeordneten Wälzkörper aufgenommen. Die Auszugsführung weist allerdings eine relativ hohe Bauform auf, die für eine Unterflurauszugsführung nicht vorteilhaft ist.

Es ist eine Aufgabe der vorliegenden Erfindung, eine Auszugsführung der eingangs genannten Art bereitzustellen, die bei geringer Bauhöhe ein hohes Kippmoment aufnehmen kann, um auch mit hohen Lasten belastete Möbelteile über den gesamten Auszugsweg führen zu können.

Diese Aufgabe wird gelöst durch eine Auszugsführung der eingangs genannten Art mit den Merkmalen des unabhängigen Anspruchs. Vorteilhafte Ausgestaltungen und Weiterbildungen der Erfindung sind in den abhängigen Ansprüchen angegeben.

Die zwischen dem umgreifenden Schenkel der Mittelschiene und der Korpusschiene angeordneten rollenförmigen Wälzkörper dienen der Übertragung von nach oben auf die Mittelschiene wirkenden Kräften auf die Korpusschiene. Derartige Kräfte treten insbesondere bei einer ausgezogenen Auszugsführung als Kippmoment auf. Die Verwendung von rollenförmigen Wälzkörpern erlaubt dabei eine Verteilung der Kräfte auf einen linien- und nicht nur punktförmigen Kontaktbereich zwischen Wälzkörper und Wälzkörperlaufbahn, wodurch ein hohes Kippmoment aufgenommen werden kann. Die rollenförmigen Wälzkörper bzw. die weiteren rollenförmigen Wälzkörper können beispielsweise zylinderförmig, tonnenförmig, nadelförmig oder scheibenförmig sein.

Durch die horizontal nach unten ausgerichteten Wälzkörperlaufbahn an der Mittelschiene wird die nach unten gerichtete Kraft bei einem auf die Mittelschiene wirkenden Kippmoment senkrecht zu der Rollachse der rollenförmigen Wälzkörper übertragen. So werden axial auf die Wälzkörper wirkende und deren Lagerung belastende Kräfte vermieden.

Um eine kompakte Bauhöhe zu erzielen, ist erfindungsgemäß vorgesehen, dass der vertikale Abstand zwischen dem Horizontalabschnitt der Mittelschiene und einem darüber liegenden Horizontabschnitt der Laufschiene kleiner ist als der Durchmesser der Wälzkörper, die auf den nach außen geneigten äußeren Wälzkörperlaufbahnen der Mittelschiene laufen. Derart kann eine besonders geringe Bauhöhe der zwischen Mittelschiene und Laufschiene ausgebildeten Prismenführung erreicht werden.

Bei einer vorteilhaften Ausgestaltung der Auszugsführung sind die Wälzkörperlaufbahnen als gerade Flächen ausgeführt. Bei einer derartigen Ausbildung können zylindrische Wälzkörper mit einem im Verhältnis zu ihrem Radius besonders langen Kontaktbereich verwendet werden. Dieses resultiert in einer hohen Belastbarkeit bei geringer Bauhöhe.

Bei einer weiteren vorteilhaften Ausgestaltung der Auszugsführung weist die Korpusschiene einen vertikalen Laufsteg mit zumindest einer vertikalen Wälzkörperlaufbahn auf. Bevorzugt laufen auf der zumindest einen vertikalen Wälzkörperlaufbahn scheibenförmige Wälzkörper und/oder nadelförmige Wälzkörper. Die Oberfläche des vertikalen Laufstegs dient ein- oder beidseitig als vertikale Laufbahn oder Laufbahnen. Mithilfe der scheibenförmigen und/oder nadelförmigen Wälzkörper kann eine seitliche Führung zwischen der Korpusschiene und der Mittelschiene erreicht werden. Insbesondere wenn der vertikale Laufsteg nicht mittig innerhalb der Mittelschiene positioniert ist, ist dabei eine Kombination aus nadelförmigen Wälzkörpern auf der einen und scheibenförmigen Wälzkörpern auf der anderen Seite des vertikalen Laufstegs besonders geeignet.

Bei einer alternativen weiteren vorteilhaften Ausgestaltung der Auszugsführung weist die Korpusschiene ein Dreiecksprofil auf, an der die nach unten gerichtete horizontale Wälzkörperlaufbahn ausgebildet ist, sowie zwei schräg nach oben gerichtete weitere Wälzkörperlaufbahnen. Bei dieser Ausgestaltung wird eine Seitenführung und eine Aufnahme von nach unten wirkenden Kräften durch die schräg nach oben gerichteten weiteren Wälzkörperlaufbahnen bzw. die auf ihnen abrollenden Wälzkörper erreicht. Wie zwischen Mittel- und Laufschiene wird also hier auch zwischen Mittel- und Korpusschiene eine insbesondere im Hinblick auf die vertikale Bauhöhe kompakte Prismenführung eingesetzt.

Bei einer weiteren vorteilhaften Ausgestaltung der Auszugsführung ist an dem Horizontalabschnitt und/oder dem Schenkel der Mittelschiene zumindest abschnittsweise eine Materialverdickung zur Verstärkung der Mittelschiene aufgebracht. Bevorzugt ist die Materialverdickung durch Walzvorgänge eines Bleches, aus dem die Mittelschiene erstellt ist, oder durch aufgebrachte Materialstreifen gebildet. Auf diese Weise kann eine besonders hoch belastbare Auszugsführung hergestellt werden, ohne dass insgesamt für die Mittelschiene eine größere Materialstärke gewählt wird. Es wird eine Material- und somit Gewichts- und Kosteneinsparung erzielt.

Bei einer weiteren vorteilhaften Ausgestaltung der Auszugsführung ist an der Mittelschiene mindestens eine drehbare Stützrolle ortsfest gelagert, die mit der Laufschiene zusammenwirkt. Die Stützrollen können zusätzlich zu den Wälzkörpern zur Lagerung der Laufschiene an der Mittelschiene eingesetzt werden, beispielsweise um ein Kippmoment von der Lauf- auf die Mittelschiene zu übertragen. Die Stützrollen sind bevorzugt paarweise auf einer der Seiten der Auszugsführung angeordnet und beispielsweise in ihrer Position ortsfest zur Mittelschiene über Zapfen an dieser drehbar gelagert.

Die Erfindung wird nachfolgend anhand von Ausführungsbeispielen mithilfe von Figuren näher erläutert.

Die Figuren zeigen:
- Fig. 1: ein Ausführungsbeispiel einer Auszugsführung mit Korpus-, Mittel- und Laufschiene in einer Seitenansicht;
- Fig. 2 a bis d: die Korpusschiene der Auszugsführung gemäß Fig. 1 mit zugeordneten Wälzkörpern in perspektivischer Darstellung (a), in einer Ansicht auf eine Stirnfläche (b), einer Seitenansicht (c) und einer Draufsicht (d);
- Fig. 3a bis d: die Mittelschiene der Auszugsführung gemäß Fig. 1 mit zugeordneten Wälzkörpern in perspektivischer Darstellung (a), in einer Ansicht auf eine Stirnfläche (b), einer Seitenansicht (c) und einer Draufsicht (d);
- Fig. 4a bis 4d: die Laufschiene der Auszugsführung gemäß Fig. 1 mit zugeordneten Wälzkörpern in perspektivischer Darstellung (a), in einer Ansicht auf eine Stirnfläche (b), einer Seitenansicht (c) und einer Draufsicht (d);
- Fig. 5a, b: innere Wälzkörperkäfige in einer perspektivischen Ansicht (a) sowie einer Ansicht auf eine Stirnfläche (b);
- Fig. 6a, b: äußere Wälzkörperkäfige in einer perspektivischen Ansicht (a) sowie einer Ansicht auf eine Stirnfläche (b);
- Fig. 7a, b: eine vereinfachte Schnittdarstellung (a) sowie eine Ansicht auf eine Stirnfläche (b) der Auszugsführung der Fig. 1;
- Fig. 8a, b: jeweils eine vereinfachte Schnittdarstellung der Auszugsführung der Fig. 1; und
- Fig. 9: ein weiteres Ausführungsbeispiel einer Auszugsführung in einer Schnittdarstellung.

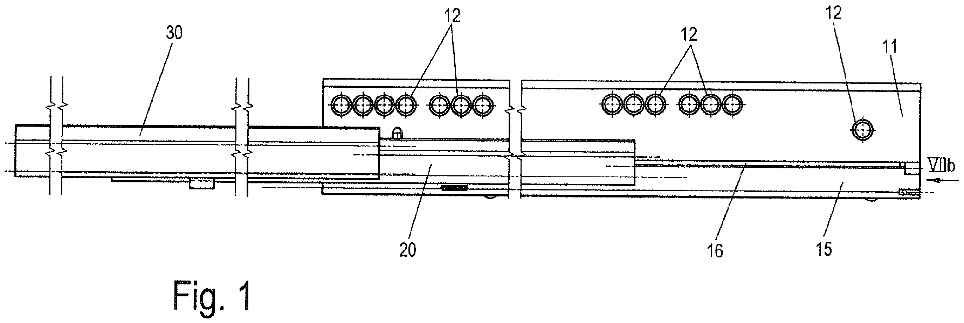

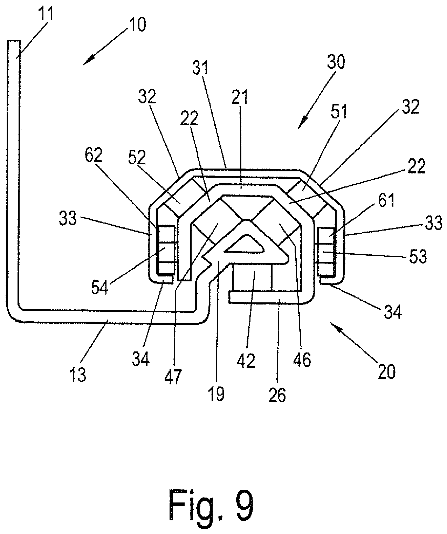

In den nachfolgend beschriebenen Figuren sind zwei Ausführungsbeispiele einer Auszugsführung näher beschrieben. Die Figuren 1 bis 8 betreffen ein erstes Ausführungsbeispiel, in Fig. 9 ist ein gegenüber dem ersten modifiziertes zweites Ausführungsbeispiel wiedergegeben. In allen Figuren bezeichnen gleiche Bezugszeichen gleiche oder gleichwirkende Elemente.

Fig. 1 zeigt zur Übersicht das erste Ausführungsbeispiel einer Auszugsführung in einer teilweise ausgezogenen Stellung in einer Seitendarstellung. Die Auszugsführung weist drei Führungsschienen auf, eine Korpusschiene 10, eine Mittelschiene 20 und eine Laufschiene 30.

Die Mittelschiene 20 ist gegenüber der Korpusschiene 10 und gegenüber der Laufschiene 30 jeweils über in der Figur 1 nicht sichtbare rollenförmige Wälzkörper verschiebbar geführt. Die verwendeten Wälzkörper sind vorzugsweise in Wälzkörperkäfigen gehalten. Es können ein oder mehrere derartige Wälzkörperkäfige für jedes der Schienenpaare (Korpusschiene 10/Mittelschiene 20 bzw. Mittelschiene 20/Laufschiene 30) vorgesehen sein. Zusätzlich zu den Wälzkörpern können Lauf- oder Gleitelemente zur Führung der Führungsschienen untereinander vorgesehen sein, die sich von den Wälzkörpern darin unterscheiden, dass ihre Position relativ zu einer der Führungsschienen festliegt.

Die Korpusschiene 10 weist einen vertikalen Montageabschnitt 11 auf, mit der sie beispielsweise an einer Innenwand eines Möbelkorpus, zum Beispiel einem Küchenschrank, festgelegt werden kann. Zu diesem Zweck sind in den Montageabschnitt 11 Befestigungsbohrungen 12 eingebracht. Die Laufschiene 30 wird an dem zu bewegenden Möbelteil, beispielweise einem Schubkasten, festgelegt. Sie weist zu diesem Zweck an sich bekannte Befestigungsmittel auf, die bei diesem Ausführungsbeispiel nicht dargestellt sind. Die Befestigungsmittel können beispielsweise einen Einsteckhaken und/oder Rastmittel bzw. Eingriffsöffnungen für Rastmittel umfassen.

Alle drei Führungsschienen sind bevorzugt aus Metallblech gefertigt, das für alle drei Schienen eine einheitliche Materialstärke aufweisen kann oder aber auch eine an die jeweilige Belastung angepasste unterschiedliche Materialstärke. Die einzelnen Führungsschienen sind jeweils besonders bevorzugt als einstückige Rollformprofile erstellt. Sie können aber auch als reine Stanzbiegeteile oder in einer Kombination beider genannter Verfahren hergestellt werden.

Wenn zur Erzielung einer besonderen Stabilität für eine Schwerlastausführung innerhalb einer Führungsschiene in ausgewählten Bereichen eine größere Materialstärke gewünscht ist, kann dieses durch Verwendung eines sogenannten Tailored-Blanks geschehen, bei dem durch einen vorhergehenden Walzprozess abschnittsweise eine dickere Materialstärke eingestellt ist. Alternativ kann in den zu verstärkenden Abschnitten ein zusätzliches Blechelement als Materialverstärkung eingesetzt werden, das beispielsweise in einem Punktschweißvorgang aufgesetzt wird.

In den hier dargestellten Ausführungsbeispielen ist die Auszugsführung ohne zusätzliche Funktionselemente wiedergegeben. Es versteht sich jedoch, dass die dargestellte Auszugsführung mit an sich bekannten Ein- bzw. Auszugsvorrichtungen für ein oder beide der Endstellungen versehen werden kann sowie mit davon separaten oder damit kombinierten Dämpfungseinheiten. Weiterhin können Synchronisationsmittel vorgesehen sein, die eine spiegelbildlich synchrone Bewegung der Korpusschiene 10 und der Laufschiene 30 relativ zur Mittelschiene 20 bewirken.

Die Form, insbesondere das Profil, der Führungsschienen sowie die Anordnung und Ausführung der zwischen den Führungsschienen angeordneten Wälzkörper ist in den nachfolgend beschriebenen Figuren näher erläutert.

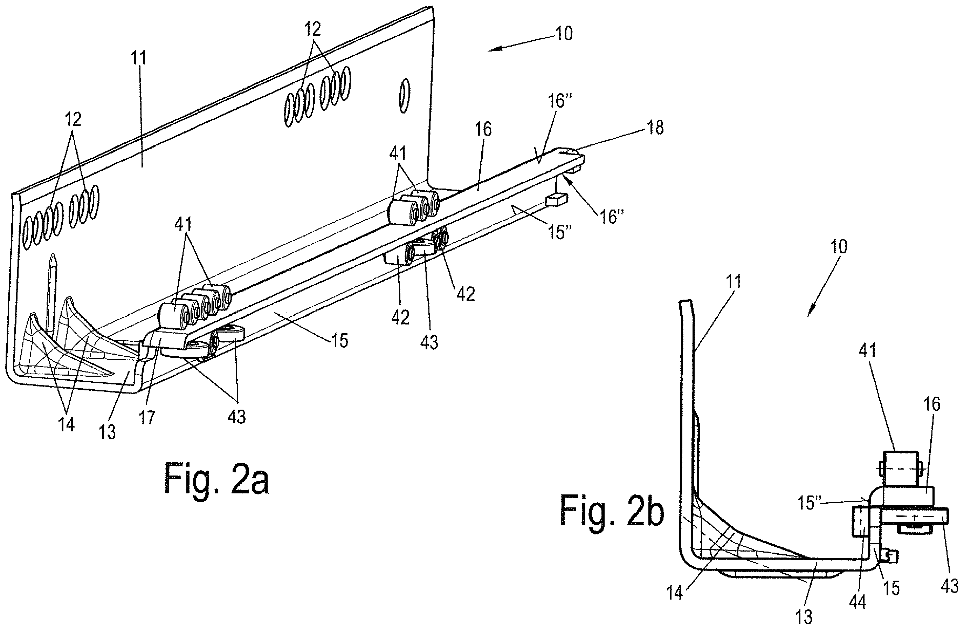

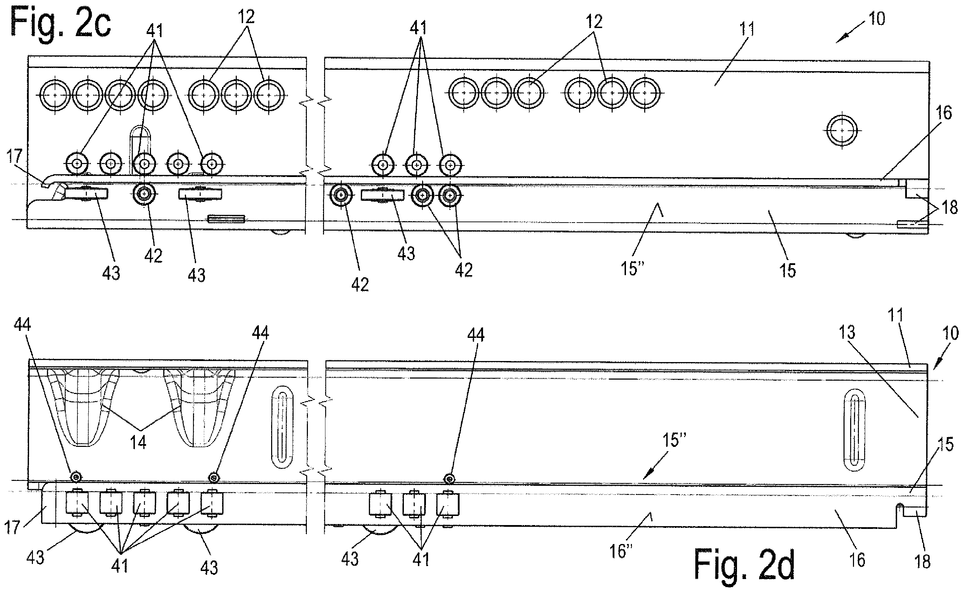

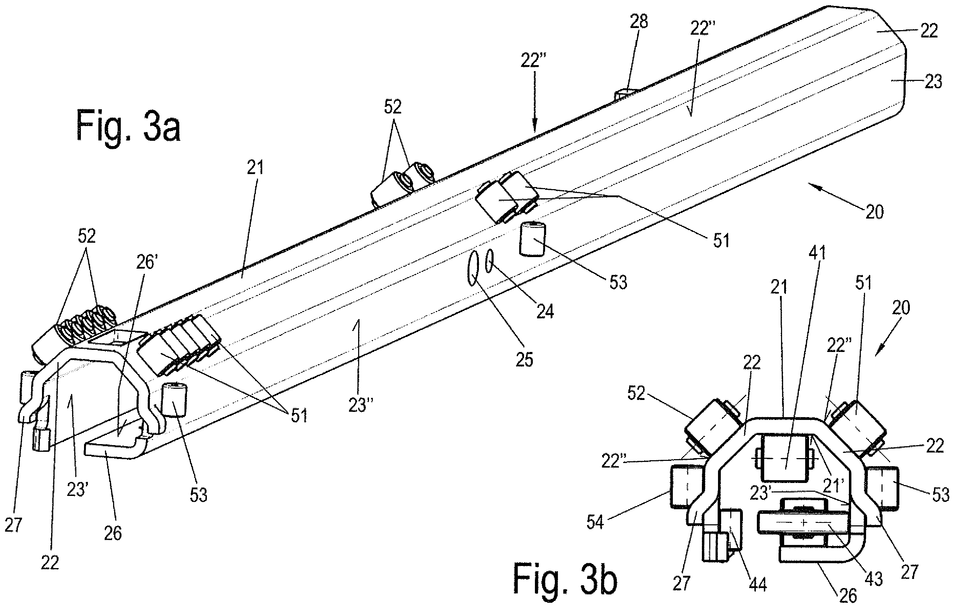

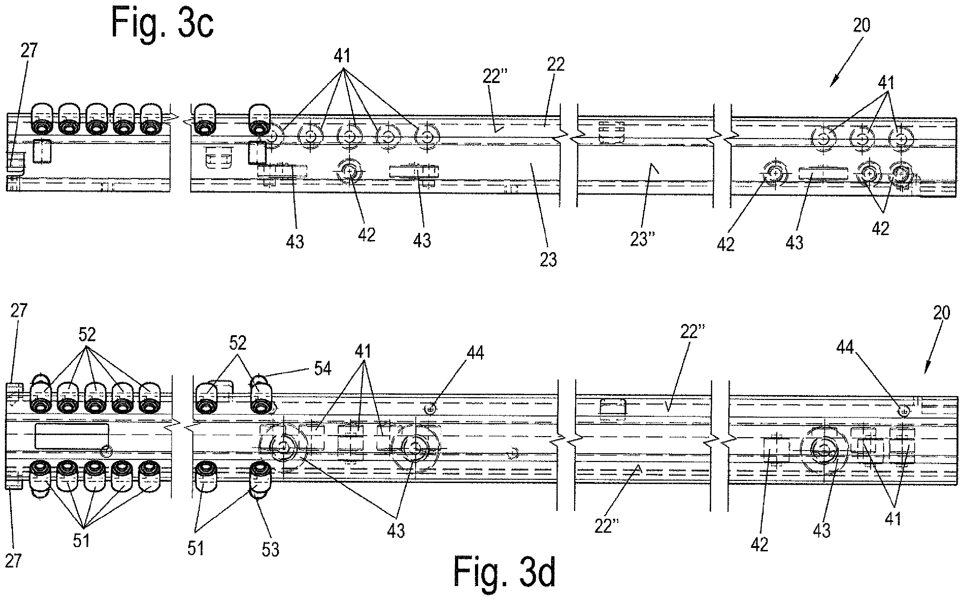

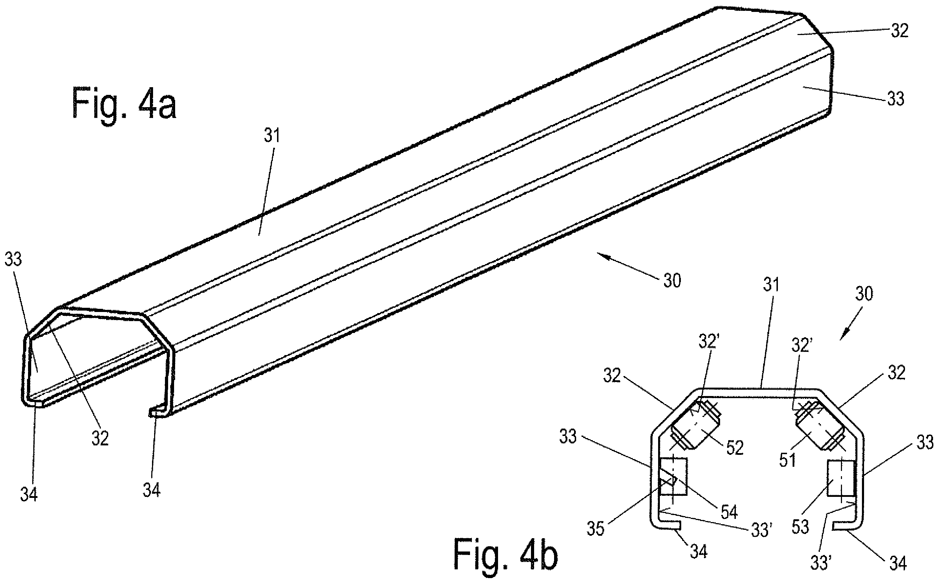

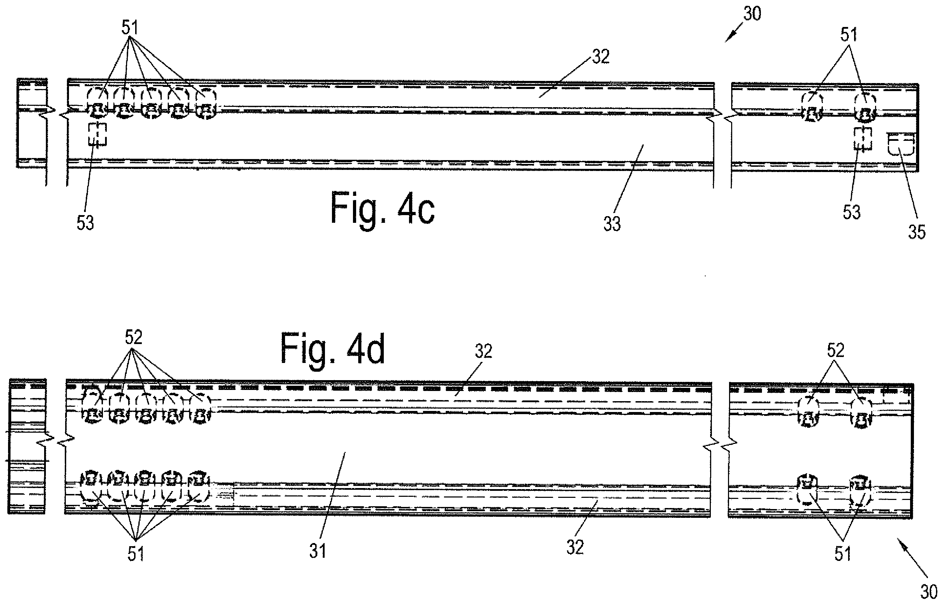

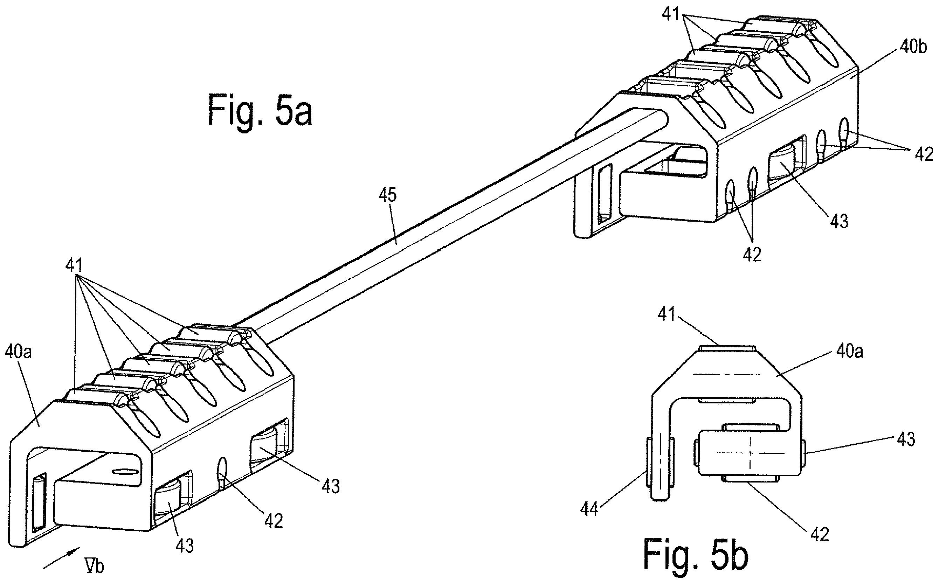

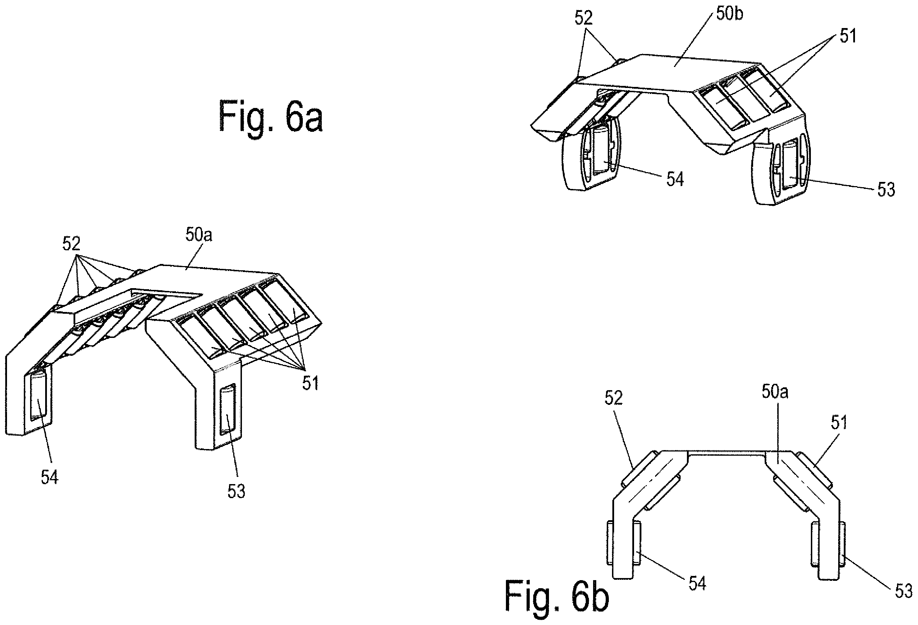

Die Figuren 2 bis 4 zeigen zu diesem Zweck jeweils eine der Führungsschienen, die Korpusschiene 10 in Fig. 2, die Mittelschiene 20 in Fig. 3 und die Laufschiene 30 in Fig. 4, ohne die jeweils anderen Führungsschienen, aber mit zugeordneten Wälzkörpern. Diese wiederum sind der Übersichtlichkeit halber ohne die sie aufnehmenden Wälzkörperkäfige wiedergegeben. Die Figuren 2 bis 4 umfassen jeweils Teilbilder a bis d, wobei im Teilbild a die jeweilige Führungsschiene in einer perspektivischen Ansicht, im Teilbild b in einer Aufsicht auf eine Stirnfläche, im Teilbild c in einer Seitenansicht und im Teilbild d in einer Draufsicht wiedergegeben ist. Die in den Fig. 2 bis 4 nicht dargestellten Wälzkörperkäfige sind in den Fig. 5 und 6 wiedergegeben, auf die bei der Beschreibung der einzelnen Führungsschienen Bezug genommen wird.

Wie Fig. 2 zeigt, ist am unteren Ende des Montageabschnitts 11 der Korpusschiene 10 ein horizontaler Auslegersteg 13 abgebogen. Im Übergangsbereich zwischen dem Montageabschnitt 11 und dem Auslegersteg 13 sind hier beispielhaft zwei Versteifungsrippen 14 ausgebildet. Für Schwerlastanwendungen kann die Anzahl der Versteifungsrippen 14 erhöht werden. Bei Auszugsführungen, die für nicht so große Lasten geeignet sind, können die Versteifungsrippen 14 gegebenenfalls auch entfallen. An dem dem Montageabschnitt 11 gegenüberliegenden Ende des Auslegerstegs 13 ist die Korpusschiene 10 wiederum senkrecht abgewinkelt und bildet einen vertikalen Abschnitt, der abermals abgekantet in einen horizontalen Abschnitt übergeht.

Die vertikalen und horizontalen Abschnitte der Korpusschiene 10 werden nachfolgend als vertikaler Laufsteg 15 bzw. horizontaler Laufsteg 16 bezeichnet, da sie Wälzkörperlaufbahn für die zwischen der Korpusschiene 10 und der Mittelschiene 20 angeordneten Wälzkörper bereitstellen. Nachfolgend werden Wälzkörperlaufbahnen abgekürzt als Laufbahnen bezeichnet und jeweils durch das Bezugszeichen des entsprechenden Abschnitts der Führungsschiene ergänzt und um ein (') oder zwei (") Apostrophs erweitert. Ein Apostroph kennzeichnet dabei nach innen weisende Laufbahnen, zwei Apostrophs nach außen weisende Laufbahnen der Führungsschienen.

Bei der Korpusschiene 10 weist der vertikale Laufsteg 15 eine erste Laufbahn 15" an der von dem Montageabschnitt 11 weg weisenden Seite und eine zweite Laufbahn 15" an der dem Montageabschnitt 11 zugewandten Seite auf. Der horizontale Laufsteg 16 weist eine erste Laufbahn 16" an seiner Oberseite und eine zweite Laufbahn 16" an seiner Unterseite auf.

Auf diesen Laufbahnen 15", 16" laufen verschiedene Wälzkörper 41 bis 44 ab, die in zwei Gruppen aufgeteilt sind, die einem vorderen Wälzkörperkäfig 40a bzw. einem hinteren Wälzkörperkäfig 40b zugeordnet sind. Die Wälzkörperkäfige 40a und 40b sind zusammen mit den Wälzkörpern 41 bis 44 in Fig. 5a in einer perspektivischen Ansicht und in Fig. 5b in einer Ansicht auf eine Stirnfläche wiedergegeben (Blickrichtung gemäß Pfeil Vb in Fig. 5a).

Die beiden Wälzkörperkäfige 40a, 40b sind durch einen Abstandshalter 45 voneinander beabstandet. Anstelle der separat ausgebildeten Wälzkörperkäfige 40a, 40b und des Abstandshalters 45 kann auch ein entsprechend langer einstückiger oder ein mehrteiliger zusammensteckbarer Wälzkörperkäfig verwendet werden. Die Wälzkörper 41 bis 44 werden nachfolgend auch als innere Wälzkörper bezeichnet, da sie innerhalb der Mittelschiene 20 liegen. Entsprechend werden die Wälzkörperkäfige 40a, 40b auch innere Wälzkörperkäfige genannt.

Als Wälzkörper werden auf den Laufbahnen 16" des horizontalen Laufstegs 16 zylindrische Wälzkörper 41, 42 verwendet. Im dargestellten Ausführungsbeispiel sind die zylindrischen Wälzkörper 41 auf der oberen Laufbahn 16" und die auf der unteren Laufbahn 16" laufenden zylindrischen Wälzkörper 42 baugleich. Sie könnten jedoch auch unterschiedlich Durchmesser aufweisen. Die zylindrischen Wälzkörper 41, 42 übertragen vertikal auf den horizontalen Laufsteg 16 einwirkende Kräfte. Diese resultieren im Wesentlichen aus der Gewichtskraft der von der Führungsschiene getragenen Last sowie einem Kippmoment um eine horizontale Achse, das bei ausgezogener Auszugsführung durch die von der Auszugsführung getragene Last hervorgerufen wird. Die zylindrischen Wälzkörper 41, 42 sind aufgrund ihrer breiten Kontaktlinie mit den Laufbahnen 16" gut zur Übertragung hoher Gewichtskräfte und der daraus resultierenden Kippmomente geeignet. Die Laufbahnen 16" sind entsprechend eben ausgebildet, um den ausgedehnten Kontakt mit den zylindrischen Wälzkörper 41, 42 zu ermöglichen. In alternativen Ausgestaltungen der Auszugsführung können auch tonnenförmige oder mit in anderer Geometrie elongierte Wälzkörper eingesetzt werden. In dem Fall kann entsprechend die korrespondierende Laufbahn der Wälzkörperform angepasst sein und eine Krümmung quer zur Längsrichtung aufweisen.

An den in Längsrichtung liegenden Enden der Laufstege 15, 16 sind Abbiegungen und/oder Ausprägungen und/oder Ausbiegungen vorgesehen, die Anschläge 17, 18 bilden. Die Anschläge 17, 18 verhindern ein Abrollen der Wälzkörper über das Ende der Laufstege hinaus. Die Anschläge 17, 18 wirken entweder unmittelbar mit den Wälzkörpern oder dem Wälzkörperkäfig zusammen oder mit Anschlägen, die an der Mittelschiene 20 ausgebildet sind. Dieselbe Funktion übernehmen in der Mittelschiene 20 Anschläge 27, 28 (vgl. Fig. 3) und in der Laufschiene 30 ein Anschlag 35 (vgl. Fig. 4).

Zur Seitenführung dienen die mit dem vertikalen Laufsteg 15 und seinen Laufbahnen 15" zusammenwirkenden nadelförmigen Wälzlager 44 sowie die scheibenförmigen Wälzkörper 43. Wegen der deutlich geringeren zu übertragenden Kräfte bei der Seitenführung sind diese jeweils nur zweifach im vorderen Wälzkörperkäfig 40a und jeweils einfach im hinteren Wälzkörperkäfig 40b vorgesehen. Insgesamt sind in jedem der Wälzkörperkäfige 40a, 40b (also in jeder Wälzkörpergruppe) wenigstens sechs der zylindrischen Wälzkörper 41, 42 angeordnet. Ihre Aufteilung in Wälzkörper 41, die auf der oberen Laufbahn 16" laufen, und Wälzkörpern 42, die auf der unteren Laufbahn 16' laufen, ist jedoch in der vorderen und der hinteren Wälzkörpergruppe unterschiedlich. Im eingefahrenen Bereich wirken die Gewichtskräfte in etwa gleich auf die vordere sowie die hintere Wälzkörpergruppe. Das Kippmoment in der ausgezogenen Position der Auszugsführung führt jedoch zu einer erhöhten Belastung auf die obere Laufbahn 16" bei der vorderen Wälzkörpergruppe und einer erhöhten Belastung auf die untere Laufbahn 16' bei der hinteren Wälzkörpergruppe. Entsprechend sind im vorderen Wälzkörperkäfig 40a wenigstens fünf der oberen zylindrischen Wälzkörper 41 vorgesehen und nur wenigstens ein unterer zylindrischer Wälzkörper 42, wohingegen in dem hinteren Wälzkörperkäfig 40b jeweils wenigstens drei obere zylindrische Wälzkörper 41 und wenigstens drei untere zylindrische Wälzkörper 42 angeordnet sind.

Fig. 3 zeigt in ähnlicher Art wie Fig. 2 die Mittelschiene 20 in verschiedenen Darstellungen. Zusätzlich zur Mittelschiene 20 sind die ihr zugeordneten Wälzkörper dargestellt. Diese sind, wie aus der Darstellung auf die Stirnfläche in Teilfigur 3b sowie der Seitenansicht aus Teilfigur 3c und der Draufsicht aus Teilfigur 3d (hier als verdeckte Elemente gestrichelt eingezeichnet) hervorgeht, die inneren Wälzkörper 41 bis 44, die die Verschiebbarkeit zur Korpusschiene 10 herstellen. Darüber hinaus sind die äußeren Wälzkörper 51 bis 54, die in Wirkverbindung mit der Laufschiene 30 stehen und die auf äußeren Laufbahnen der Mittelschiene 20 abrollen, dargestellt.

Die Mittelschiene 20 ist C-förmig profiliert mit einem oberen mittleren Horizontalabschnitt 21, an den sich zu beiden Seiten Schrägabschnitte 22 anschließen. Die Außenflächen der Schrägabschnitte 22 bilden äußere Laufbahnen 22" für die äußeren Wälzkörper 51 bzw. 52. Nach außen schließen sich an die beiden Schrägabschnitte 22 Seitenabschnitte 23 an, deren äußere Flächen jeweils wiederum Laufbahnen 23' bilden. Auf diesen laufen die äußeren Wälzkörper 53 bzw. 54.

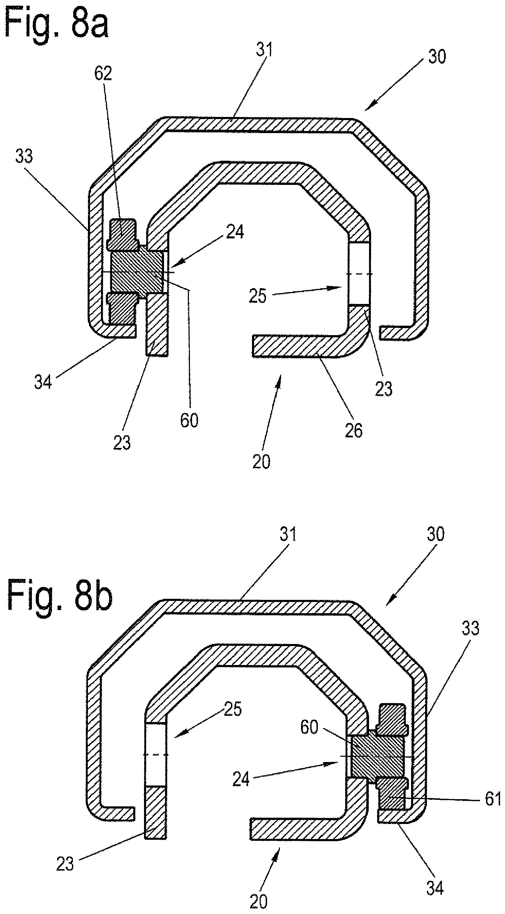

In den Seitenabschnitten 23 sind Aufnahmebohrungen 24 für zusätzliche Stützrollen ausgebildet. In jeder der beiden Seitenabschnitte 23 ist eine derartige Aufnahmebohrung 24 vorgesehen, wobei die Aufnahmebohrung 24 in den beiden Seitenabschnitten 23 bezüglich ihrer Längsposition versetzt sind. Gegenüber der jeweiligen Aufnahmebohrung 24 ist eine Montagebohrung 25 angeordnet, die einen leicht größeren Durchmesser als die Aufnahmebohrung 24 aufweist. Die Funktion der Aufnahmebohrung 24 und der Montagebohrung 25 wird im Zusammenhang mit Fig. 8 näher erläutert.

Während auf einer Seite des Profils der Mittelschiene 20 der Seitenabschnitt 23 einen freien Schenkel des C-förmigen Profils bildet, ist der Seitenabschnitt 23 auf der gegenüberliegenden Seite des Profils horizontal nach innen abgekantet, so dass auf dieser Seite ein horizontal verlaufender Schenkel 26 mit einer nach innen gerichteten Laufbahn 26' gebildet ist. Während die eine Seite des C-förmigen Profils der Mittelschiene 20 somit ein offenes "C" bildet, ist auf der gegenüberliegenden Seite ein geschlossenes "C" geformt.

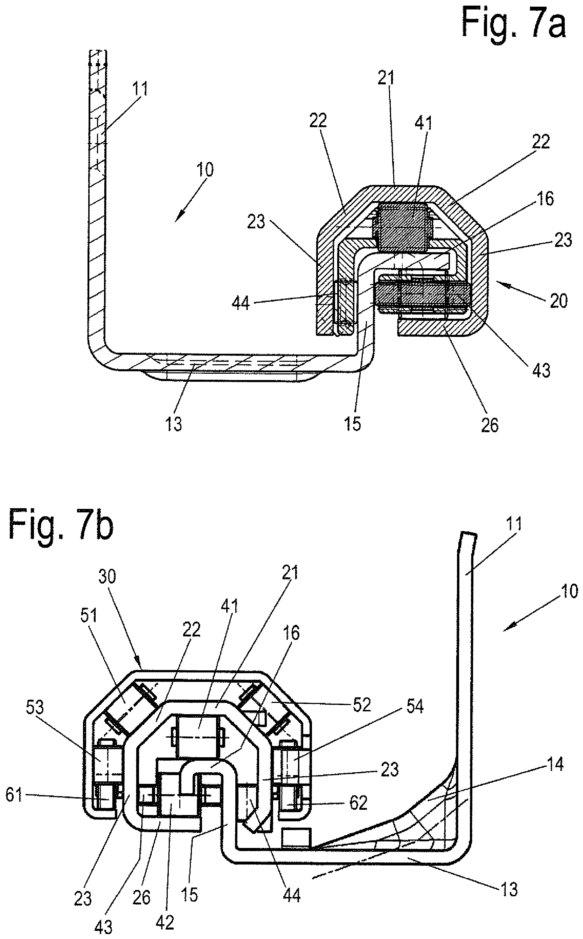

Das Zusammenwirken der Korpusschiene 10 mit der Mittelschiene 20 über die inneren Wälzkörper 41 bis 44 ist in der Fig. 7a in einer Querschnittsdarstellung durch diese beiden Schienen detaillierter dargestellt.

Vertikal nach unten auf die Mittelschiene 20 wirkende Kräfte werden von den inneren zylindrischen Wälzkörpern 41 aufgenommen, die zwischen der Laufbahn 16" an der Oberseite des horizontalen Laufstegs 16 der Korpusschiene 10 und der Innenseite des Horizontalabschnitts 21 der Mittelschiene 20 angeordnet sind. Vertikal nach oben auf die Mittelschiene 20 wirkende Kräfte werden von den inneren zylindrischen Wälzkörpern 42 übertragen, die zwischen der Unterseite des horizontalen Laufstegs 16 der Korpusschiene 10 (untere Laufbahn 16") und der Oberseite des Schenkels 26 der Mittelschiene 20 (Laufbahn 26') angeordnet sind. Wie aus der Schnittdarstellung gut zu erkennen ist, umgreift der Schenkel 26 somit die Korpusschiene 10 teilweise und ermöglicht so die Aufnahme eines hohen Kippmoments.

Zur Seitenführung der Mittelschiene 20 an der Korpusschiene 10 dienen wie bereits beschrieben die inneren scheibenförmigen Wälzkörper 43 auf einer Seite des vertikalen Laufstegs 15 sowie die innere nadelförmigen Wälzkörper 44 auf der anderen Seite des vertikalen Laufstegs 15.
An der Mittelschiene 20 laufen die inneren Wälzkörper 43, 44 jeweils an der Innenseite der beiden Seitenabschnitte 23 an den Laufbahnen 23' ab. Bedingt durch die Verwendung des nadelförmigen inneren Wälzkörpers 44 an der zum Montageabschnitt 11 weisenden Seite des vertikalen Stegs 15 kann an dieser Seite ein kleiner Abstand zwischen dem vertikalen Laufsteg 15 der Korpusschiene 10 und dem entsprechenden Seitenabschnitt 23 der Mittelschiene 20 erzielt werden. Der Auslegersteg 13 braucht somit nur unwesentlich länger zu sein, als der zwischen Montageabschnitt 11 und den Führungsschienen gewünschte Abstand. Dieses wirkt sich günstig auf die Statik der Korpusschiene 10 aus. Im dargestellten Ausführungsbeispiel ist ein relativ großer Abstand zwischen dem Montageabschnitt 11 und den Führungsschienen vorgesehen. Die gezeigte Ausgestaltung der Auszugsführung ist damit insbesondere als sogenannte Unterflurauszugsführung geeignet, die häufig in Verbindung mit Holzschubkästen verwendet wird. Dabei verläuft die Seitenwand des Schubkastens in dem zwischen dem Montageabschnitt 11 und der Laufschiene 30 gebildeten Spalt. Der Schubkasten liegt dann mit seinem Boden auf der Laufschiene 30 auf.

Fig. 4 zeigt in wiederum gleicher Weise wie die Fig. 2 und 3 die Laufschiene 30 detaillierter.

Die Laufschiene 30 ist ähnlich der Mittelschiene 20 C-förmig ausgebildet mit einem oberen, mittleren Horizontalabschnitt 31, an den sich Schrägabschnitte 32 zu beiden Seiten anschließen, die wiederum in vertikale Seitenabschnitte 33 übergehen. Die Enden der Seitenabschnitte 33 sind jeweils nach innen umgekantet, so dass zu beiden Seiten horizontale Endabschnitte 34 gebildet sind. Anders als die Mittelschiene 20 ist die Laufschiene 30 bezüglich ihres Profils symmetrisch. Wie insbesondere aus der Seitenansicht der Teilfigur 4c ersichtlich ist, ist an zumindest einem Ende der Laufschiene 30 der Anschlag 35 ausgestellt. Die nach innen gerichteten Oberflächen der Schrägabschnitte 32 und der Seitenabschnitte 33 stellen jeweils Laufbahnen 32' bzw. 33' dar.

Das Zusammenwirken der Mittelschiene 20 mit der Laufschiene 30 über die äußeren Wälzkörper 51 bis 54 ist gut aus der Fig. 7b ersichtlich, in der eine Ansicht auf eine Stirnseite der Auszugsführung in Längsrichtung dargestellt ist. Die Blickrichtung ist in der Fig.1 durch den mit Vllb bezeichneten Pfeil angegeben.

Eine vertikal von oben auf die Laufschiene 30 wirkende Kraft wird über die äußeren Wälzkörper 51 und 52 übertragen, die auf den entsprechenden Laufbahnen 22" der Schrägabschnitte 22 der Mittelschiene 20 bzw. den Laufbahnen 32' der Schrägabschnitte 32 der Laufschiene 30 abrollen. Diese Wälzkörper 51, 52 sind wie die die vertikale Last tragenden inneren Wälzkörper 41 zylindrisch ausgeführt, so dass sie eine möglichst große Kontaktlinie mit den entsprechenden Laufbahnen 22", 32' aufweisen. Anstelle von zylindrischen Wälzkörpern 51, 52 können auch hier tonnenförmige oder mit anderer Geometrie elongierte Wälzkörper eingesetzt werden.

Entsprechend der Schrägstellung der Schrägabschnitte 22, 32 sind die Drehachsen der äußeren zylindrischen Wälzkörper 51, 52 prismenförmig zueinander geneigt, vorliegend um etwa 90 Grad. Aus dieser Schrägstellung resultiert zusätzlich zur Aufnahme der vertikalen Last eine gute Seitenführung der Laufschiene 30 auf der Mittelschiene 20. Zudem wird eine geringe Bauhöhe erreicht.

Darüber hinaus sind zur Seitenführung die äußeren ebenfalls zylindrisch ausgebildeten Wälzkörper 53, 54 vorgesehen, die mit im Wesentlichen senkrechter Drehachse auf den entsprechenden Laufbahnen 23" bzw. 33' der Seitenabschnitte 23 bzw. 33 ablaufen. Im vorliegenden Ausführungsbeispiel sind die äußeren zylindrischen Wälzkörper 53, 54 im Durchmesser leicht kleiner gewählt als die äußeren zylindrischen Wälzkörper 51, 52.

Ähnlich der inneren Wälzkörper 41 bis 44 sind auch die äußeren Wälzkörper 51 bis 54 in zwei Gruppen angeordnet, denen jeweils ein äußerer Wälzkörperkäfig 50a bzw. ein äußerer Wälzkörperkäfig 50b zugeordnet ist. Die Wälzkörperkäfige 50a und 50b sind zusammen mit den Wälzkörpern in Fig. 6a in einer perspektivischen Ansicht und in Fig. 6b in einer Ansicht auf eine Stirnfläche wiedergegeben (Blickrichtung gemäß Pfeil Vlb in Fig. 6a).

Bedingt durch das Kippmoment bei ausgezogener Auszugsführung ist im vorderen äußeren Wälzkörperkäfig 50a eine größere Anzahl der die vertikal von oben wirkenden Kräfte aufnehmenden äußeren zylindrischen Wälzkörper 51, 52 vorgesehen als im hinteren Wälzkörperkäfig 50b. Der hintere Wälzkörperkäfig 50b stellt in der dargestellten Ausgestaltung jeweils drei Lagerplätze für die äußeren zylindrischen Wälzkörper 51, 52 zur Verfügung. Von denen sind in diesem Ausführungsbeispiel nur jeweils zwei Lagerplätze belegt. Für eine Ausführung der Auszugsführung, die noch größeren Lasten aufnehmen kann, kann wahlweise der hintere Wälzkörperkäfig 50b auch mit jeweils wenigstens drei äußeren zylindrischen Wälzkörpern 51, 52 bestückt sein.

Vorliegend sind die beiden äußeren Wälzkörperkäfige 50a, 50b separat voneinander ausgebildet. Wie im Zusammenhang mit Fig. 5 beschrieben ist, kann optional auch ein Abstandshalter zwischen beiden äußeren Wälzkörperkäfigen 50a, 50b vorgesehen sein oder es kann ein einziger, entsprechend langer Wälzkörperkäfig vorhanden sein, der entsprechend Lagerplätze für die Wälzkörper in seinem vorderen bzw. seinem hinteren Bereich aufweist.

Im dargestellten Ausführungsbeispiel sind sämtliche Wälzkörper 41 bis 44 und 51 bis 54 mit Lagerzapfen an ihren Stirnseiten versehen, mit denen sie in den Wälzkörperkäfigen 40a, 40b, 50a, 50b gelagert sind. In alternativen Ausgestaltungen ist es denkbar, die Lagerzapfen seitens der Wälzkörperkäfige bereit zustellen und in den Wälzkörpern geeignete stirnseitige Vertiefungen zu verwenden.

Die verwendeten Wälzkörper 41, 44, 51, 54 sind bevorzugt aus einem gehärteten Stahl hergestellt. Dabei kann das gleiche Material für alle Wälzkörper verwendeten werden. Alternativ ist auch denkbar, einige der Wälzkörper aus einem anderen Material herzustellen, das insbesondere eine andere Härte aufweist. Beispielsweise ist es denkbar, einige der Wälzkörper aus einem deutlich weicheren Material, insbesondere einem Kunststoffmaterial, herzustellen. Dieses kann die Laufeigenschaften positiv beeinflussen und insbesondere Laufgeräusche verringern.

Wälzkörper, die auf derselben Laufbahn abrollen bzw. die auf miteinander korrespondierenden Laufbahnen abrollen (beispielsweise die äußeren zylindrischen Wälzkörper 51 und die äußeren zylindrischen Wälzkörper 52) weisen im Regelfall alle denselben Durchmesser auf. Es kann jedoch vorgesehen sein, einzelne auf derselben bzw. miteinander korrespondierenden Laufbahn abrollenden Wälzkörper mit einem leicht abweichenden Durchmesser auszubilden. Auch dieses kann sich vorteilhaft auf die Laufeigenschaft auswirken und insbesondere eine Verringerung der Laufgeräusche bewirken.

Bei dem hier dargestellten Ausführungsbeispiel werden vertikal von unten auf die Laufschiene 30 wirkende Kräfte, wie sie beispielsweise durch das Kippmoment bei ausgezogener Auszugsführung auftreten, nicht über die äußeren Wälzkörper 51 bis 54 auf die Mittelschiene 20 übertragen. Grundsätzlich ist es möglich, analog zur Mittelschiene 20, die mit ihrem abgebogenen Schenkel 26 die Korpusschiene 10 zumindest teilweise umgreift, auch die Laufschiene 30 so auszugestalten, dass sie mit einem ihrer horizontalen Endabschnitte 34 die Mittelschiene 20 umgreift. Zwischen diesem umgreifenden Endabschnitt der Laufschiene 30 und dem umgreifenden Schenkel 26 der Mittelschiene 20 könnten weitere äußere Wälzkörper angeordnet sein, die entsprechend geeignet sind, ein Kippmoment aufzunehmen.

Bei dem vorliegenden Ausführungsbeispiel ist eine Alternative dazu umgesetzt. Vorliegend sind die umkanteten Endabschnitte 34 so ausgebildet, dass sie die Mittelschiene 20 nicht umgreifen, sondern dass sie seitlich von der Mittelschiene 20 positioniert sind. Die Oberseiten der umkanteten Endabschnitte 34 werden als Laufbahnen 34' verwendet, auf denen zusätzliche Stützrollen 61, 62 abrollen.

Dieses ist in Fig. 8 in zwei vereinfachten Querschnittszeichnungen durch die Mittelschiene 20 und die Laufschiene 30 dargestellt. Die zusätzlichen Stützrollen 61 und 62, die jeweils auf einer der Seiten der Auszugsführung angeordnet sind, sind in ihrer Position ortsfest zur Mittelschiene 20 über Zapfen 60 an dieser drehbar gelagert. Die Zapfen 60 sind dabei in die bereits im Zusammenhang mit Fig. 3 erwähnten Aufnahmebohrungen 24 eingesetzt, insbesondere eingepresst. Gegenüber jeder Aufnahmebohrung 24 ist jeweils die im Durchmesser größere Montagebohrung 25 in den gegenüberliegenden Seitenabschnitt 23 der Mittelschiene 20 eingestanzt. Durch diese Montagebohrung 25 kann ein Unterstützungsdorn in die Mittelschiene 20 eingeführt werden, über den ein Gegendruck auf den Seitenabschnitt 23 im Bereich des Rands der Aufnahmebohrung 24 ausgeübt werden kann, wenn der Zapfen 60 in die Aufnahmebohrung 24 eingepresst wird. Entsprechend sind die beiden zusätzlichen Stützrollen 61 und 62 zu beiden Seiten der Auszugsführung nicht an derselben Längsposition angeordnet, sondern in Längsrichtung leicht versetzt zueinander. Beim vorliegenden Ausführungsbeispiel ist auf jeder der beiden Seiten eine derartige zusätzliche Stützrolle 61, 62 angeordnet. Sollen größere Kippmomente aufgenommen werden können, können paarweise mehrere derartiger Stützrollen 61, 62 vorgesehen sein. Alternativ kann an dieser Position statt der Aufnahmebohrung auch direkt ein Achsstummel aus dem Grundmaterial als Durchzug herausgezogen oder ein Bolzen stoffschlüssig auf der Oberfläche befestigt werden.

Bezüglich ihrer Position in Längsrichtung sind die Stützrollen in etwa mittig an der Mittelschiene 20 angeordnet, so dass sie bei vollständig ausgezogener Auszugsführung die Laufschiene 30 gerade an ihrem hinteren Ende unterstützen. Die Position der zusätzlichen Stützrollen 61, 62 ist anhand der Lage der Aufnahmebohrung 24 bzw. der Montagebohrung 25 in Fig. 3a ersichtlich.

Fig. 9 zeigt ein zweites Ausführungsbeispiel einer anmeldungsgemäßen Auszugsführung in einer schematischen Draufsicht in Längsrichtung, vergleichbar mit der Darstellung in Fig. 7b des ersten Ausführungsbeispiels. Die Mittelschiene 20 sowie die Laufschiene 30 und auch die Führung dieser beiden Schienen zueinander durch die äußeren Wälzkörper 51 bis 54 und die zusätzlichen Stützräder 61, 62 entsprechen im Wesentlichen dem ersten Ausführungsbeispiel, auf das hiermit verwiesen wird.

Unterschiedlich beim zweiten Ausführungsbeispiel ist insbesondere die Ausgestaltung der Korpusschiene 10. Diese weist wiederum einen vertikalen Montageabschnitt 11 auf und einen davon senkrecht abstehenden horizontalen Auslegerabschnitt 13. Die optionalen Versteifungsrippen (mit Bezugszeichen14 in Fig. 7b) sind hier nicht dargestellt.

Am Ende des Auslegerabschnitts 13 ist ein zunächst vertikal, dann schräg verlaufender Trägerabschnitt abgekantet, der in ein Dreiecksprofil 19 übergeht, das eine horizontale nach unten weisende Basis und zwei darüber liegende schräge Schenkel aufweist. Das Dreiecksprofil 19 kann entweder einstückig durch entsprechende Abkantung mit den zuvor genannten Abschnitten der Korpusschiene 10 ausgebildet sein. Alternativ kann das Dreiecksprofil 19 ein zunächst separat erstelltes Element sein, das dann mit dem Trägerabschnitt verbunden wird, insbesondere angeschweißt wird. Die Basis des Dreiecksprofils 19 stellt eine Laufbahn bereit, die in ihrer Funktion der Laufbahn 16" an der Unterseite des horizontalen Laufstegs 16 beim ersten Ausführungsbeispiel entspricht. Zwischen dieser Laufbahn und dem umgreifenden Schenkel 26 der Mittelschiene 20 sind entsprechend wiederum die inneren zylindrischen Wälzkörper 42 angeordnet.

Anstelle der inneren zylindrischen Wälzkörper 41, der inneren nadelförmigen Wälzkörper 43 und der inneren scheibenförmigen Wälzkörper 44 sind vorliegend innere zylindrische Wälzkörper 46 und 47 vorgesehen, die auf Laufbahnen abrollen, die auf den schrägen Schenkeln des Dreiecksprofils 19 ausgebildet sind. An der Mittelschiene 20 laufen diese inneren zylindrischen Wälzkörper 46, 47 an der Innenseite der schrägen Abschnitte 22 der Mittelschiene 20, also auf inneren Laufbahnen, die gerade gegenüber den äußeren Laufbahnen 22" für die äußeren zylindrischen Wälzkörper 51, 52 liegen.

Bei diesem Ausführungsbeispiel ist somit zwischen der Korpusschiene 10 und der Mittelschiene 20 eine Prismenführung umgesetzt, wie sie auch zwischen der Mittelschiene 20 und der Laufschiene 30 durch die schräg, hier nahezu senkrecht zueinander stehenden Drehachsen der äußeren zylindrischen Wälzkörper 51, 52 gegeben ist.

### Bezugszeichenliste

- 10: Korpusschiene
- 11: Montageabschnitt
- 12: Befestigungsbohrung
- 13: Auslegersteg
- 14: Versteifungsrippe
- 15: vertikaler Laufsteg
- 15": Laufbahn
- 16: horizontaler Laufsteg
- 16": Laufbahn
- 17, 18: Anschlag
- 19: Dreiecksprofil

- 20: Mittelschiene
- 21: Horizontalabschnitt
- 21': Laufbahn
- 22: Schrägabschnitt
- 22": Laufbahn
- 23: Seitenabschnitt
- 23',23": Laufbahn
- 24: Aufnahmebohrung
- 25: Montagebohrung
- 26: umgreifender Schenkel
- 26': Laufbahn
- 27, 28: Anschlag

- 30: Laufschiene
- 31: Horizontalabschnitt

- 32: Schrägabschnitt
- 32': Laufbahn
- 33: Seitenabschnitt
- 33': Laufbahn
- 34: umkanteter Endabschnitt
- 34': Laufbahn
- 35: Anschlag

- 40: innerer Wälzkörperkäfig
- 40a: vorderer Wälzkörperkäfig
- 40b: hinterer Wälzkörperkäfig
- 41, 42: innerer zylindrischer Wälzkörper
- 43: innerer scheibenförmiger Wälzkörper
- 44: innerer nadelförmiger Wälzkörper
- 45: Abstandhalter
- 46: innerer zylindrischer Wälzkörper
- 47: innerer zylindrischer Wälzkörper

- 50a: äußerer Wälzkörperkäfig
- 50b: äußerer Wälzkörperkäfig
- 51, 52: äußerer zylindrischer Wälzkörper
- 53, 54: äußerer zylindrischer Wälzkörper

- 60: Zapfen
- 61, 62: zusätzliche Stützrolle

## Patentansprüche

1. Auszugsführung für bewegbare Möbelteile, insbesondere Schubkästen, ausgebildet als Unterflurauszugsführung mit einer Korpusschiene (10), einer C-förmigen Mittelschiene (20) und einer an dem Möbelteil befestigbaren Laufschiene (30), wobei die C-förmige Mittelschiene (20) nach innen weisende innere Wälzkörperlaufbahnen (21', 22') für zwischen der Mittelschiene (20) und der Korpusschiene (10) angeordnete rollenförmige Wälzkörper (41, 43, 44,46, 47) aufweist sowie mindestens zwei durch einen Horizontalabschnitt (21) der Mittelschiene (20) voneinander beabstandete nach außen weisende und nach außen geneigte äußere Wälzkörperlaufbahnen (22") für zwischen der Mittelschiene (20) und der Laufschiene (30) angeordnete weitere rollenförmige Wälzkörper (51, 52) aufweist, wobei
an der C-förmigen Mittelschiene (20) ein freier Schenkel (26) ausgebildet ist, der die Korpusschiene (10) teilweise umgreift, wobei an einer Innenseite des Schenkels (26) eine weitere innere Wälzkörperlaufbahn (26') für zwischen der Mittelschiene (20) und der Korpusschiene (10) angeordnete rollenförmige Wälzkörper (42) ausgebildet ist, und
die Korpusschiene (10) einen horizontalen Laufsteg (16) mit zumindest einer nach unten gerichteten horizontalen Wälzkörperlaufbahn (16") aufweist, wobei die rollenförmigen Wälzkörper (42) zwischen der an dem Schenkel (26) der Mittelschiene (20) ausgebildeten weiteren inneren Wälzkörperlaufbahn (26') und der nach unten gerichteten horizontalen Wälzkörperlaufbahn (16") angeordnet sind, **dadurch gekennzeichnet, dass** ein vertikaler Abstand zwischen dem Horizontalabschnitt (21) der Mittelschiene (20) und einem darüber liegenden Horizontabschnitt der Laufschiene (30) kleiner ist als ein Durchmesser der Wälzkörper (51, 52), die auf den nach außen geneigten äußeren Wälzkörperlaufbahnen (22") der Mittelschiene (20) laufen.

2. Auszugsführung nach Anspruch 1, bei der die Wälzkörperlaufbahnen (21', 22", 26') als gerade Flächen ausgeführt sind.

3. Auszugsführung nach Anspruch 1 oder 2, bei der die Korpusschiene (10) einen vertikalen Laufsteg (15) mit zumindest einer vertikalen Wälzkörperlaufbahn (15") aufweist.

4. Auszugsführung nach Anspruch 3, bei der auf der zumindest einen vertikalen Wälzkörperlaufbahn (15") scheibenförmige Wälzkörper (43) und/oder nadelförmige Wälzkörper (44) laufen.

5. Auszugsführung nach Anspruch 1 oder 2, bei der die Korpusschiene (10) ein Dreiecksprofil (19) aufweist, an der die nach unten gerichtete horizontale Wälzkörperlaufbahn (16") ausgebildet ist sowie zwei schräg nach oben gerichtete weitere Wälzkörperlaufbahnen.

6. Auszugsführung nach einem der Ansprüche 1 bis 5, bei der an dem Horizontalabschnitt (21) und/oder dem Schenkel (26) der Mittelschiene (20) zumindest abschnittsweise eine Materialverdickung zur Verstärkung der Mittelschiene (20) aufgebracht ist.

7. Auszugsführung nach Anspruch 6, bei der die Materialverdickung durch Walzvorgänge eines Bleches, aus dem die Mittelschiene (20) erstellt ist, oder durch aufgebrachte Materialstreifen gebildet ist.

8. Auszugsführung nach einem der Ansprüche 1 bis 7, bei der die rollenförmigen Wälzkörper (41, 43, 44, 46, 47) und/oder die weiteren rollenförmige Wälzkörper (51, 52) zylinderförmig, tonnenförmig, nadelförmig oder scheibenförmig sind.

9. Auszugsführung nach einem der Ansprüche 1 bis 8, bei der an der Mittelschiene (20) mindestens eine drehbare Stützrolle (61, 62) ortsfest gelagert ist, die mit der Laufschiene (30) zusammenwirkt.

## Claims

1. A pullout guide for movable furniture parts, in particular drawers, which is formed as an underfloor pullout guide having a body rail (10), a C-shaped middle rail (20), and a slide rail (30) fastenable on the furniture part, wherein the C-shaped middle rail (20) has inwardly facing inner roller body runways (21', 22') for roller-shaped roller bodies (41, 43, 44, 46, 47) arranged between the middle rail (20) and the body rail (10), and at least two outer roller body runways (22"), which are spaced apart from one another by a horizontal segment (21) of the middle rail (20) and are inclined outward, for further roller-shaped roller bodies (51, 52) arranged between the middle rail (20) and the slide rail (30), whereby a free leg (26) is formed on the C-shaped middle rail (20), which partially encloses the body rail (10), wherein a further inner roller body runway (26') for roller-shaped roller bodies (42) arranged between the middle rail (20) and the body rail (10) is formed on an inner side of the leg (26), and
the body rail (10) has a horizontal running web (16) having at least one downwardly oriented horizontal roller body runway (16"), wherein the roller-shaped roller bodies (42) are arranged between the further inner roller body runway (26'), which is formed on the leg (26) of the middle rail (20), and the downwardly oriented horizontal roller body runway (16"), **characterized in that** the vertical distance between the horizontal segment (21) of the middle rail (20) and a horizontal segment of the slide rail (30) located above it is less than the diameter of the roller bodies (51, 52), which run on the outwardly inclined outer roller body runways (22") of the middle rail (20).

2. The pullout guide according to Claim 1, wherein the roller body runways (21', 22", 26') are embodied as linear surfaces.

3. The pullout guide according to Claim 1 or 2, wherein the body rail (10) has a vertical running web (15) having at least one vertical roller body runway (15").

4. The pullout guide according to Claim 3, wherein disk-shaped roller bodies (43) and/or needle-shaped roller bodies (44) run on the at least one vertical roller body runway (15").

5. The pullout guide according to Claim 1 or 2, wherein the body rail (10) has a triangular profile (19), on which the downwardly oriented horizontal roller body runway (16") is formed, as well as two further diagonal roller body runways oriented upward.

6. The pullout guide according to any one of Claims 1 to 5, wherein a material thickening for reinforcing the middle rail (20) is applied at least in segments on the horizontal segment (21) and/or the leg (26) of the middle rail (20).

7. The pullout guide according to Claim 6, wherein the material thickening is formed by rolling procedures of a plate, from which the middle rail (20) is prepared, or by applied material strips.

8. The pullout guide according to one of Claims 1 to 7, wherein the roller-shaped roller bodies (41, 43, 44, 46, 47) and/or the further roller-shaped roller bodies (51, 52, 53, 54) are cylindrical, drum-shaped, needle-shaped, or disk-shaped.

9. The pullout guide according to any one of Claims 1 to 8, wherein at least one rotatable support roller (61, 62), which cooperates with the slide rail (30), is mounted fixed in place on the middle rail (20).

## Revendications

1. Guide d'extraction pour des parties de meuble mobiles, en particulier des tiroirs, réalisé comme un guide d'extraction encastré avec un rail de corps (10), un rail médian en forme de C (20) et un rail de glissement (30) pouvant être fixé à la partie de meuble, dans lequel le rail médian en forme de C (20) présente des pistes de roulement intérieures (21', 22') tournées vers l'intérieur pour des éléments de roulement en forme de rouleaux (41, 43, 44, 46, 47) disposés entre le rail médian (20) et le rail de corps (10) et au moins deux autres pistes de roulement extérieures (22") séparées par une partie horizontale (21) du rail médian (20) et inclinées vers l'extérieur pour d'autres éléments de roulement en forme de rouleaux (51, 52) disposés entre le rail médian (20) et le rail de glissement (30),
dans lequel un bras libre (26) entourant partiellement le rail de corps (10) est formé sur le rail médian en forme de C (20), une autre piste de roulement intérieure (26') étant prévue sur une face intérieure du bras (26) pour des éléments de roulement en forme de rouleaux (42) disposés entre le rail médian (20) et le rail de corps (10), et
le rail de corps (10) présente une aile de glissement horizontale (16) avec au moins une piste de roulement horizontale (16") tournée vers le bas, les éléments de roulement en forme de rouleaux (42) étant disposés entre l'autre piste de roulement intérieure (26') formée sur le bras (26) du rail médian (20) et la piste de roulement horizontale (16") tournée vers le bas,
**caractérisé en ce qu'**une distance verticale entre la partie horizontale (21) du rail médian (20) et une la partie horizontale du rail de glissement (30) située au-dessus est plus petite que le diamètre des éléments de roulement (51, 52) qui roulent sur les pistes de roulement extérieures (22") inclinées vers l'extérieur du rail médian (20).

2. Guide d'extraction selon la revendication 1, dans lequel les pistes de roulement (21', 22", 26') sont réalisées comme des surfaces rectilignes.

3. Guide d'extraction selon la revendication 1 ou 2, dans lequel le rail de corps (10) présente une aile de glissement (15) verticale avec au moins une piste de roulement verticale (15").

4. Guide d'extraction selon la revendication 3, dans lequel des éléments de roulement en forme de disques (43) et/ou des éléments de roulement en forme d'aiguilles (44) roulent sur l'au moins une piste de roulement verticale (15").

5. Guide d'extraction selon la revendication 1 ou 2, dans laquelle le rail de corps (10) présente un profil triangulaire (19) sur lequel est formée la piste de roulement horizontale (16") inclinée vers le bas, ainsi que deux autres pistes de roulement tournées à l'oblique vers le haut.

6. Guide d'extraction selon l'une des revendications 1 à 5, dans lequel est formé sur la partie horizontale (21) et/ou le bras (26) du rail médian (20), au moins par endroits, un épaississement du matériau destiné à renforcer le rail médian (20).

7. Guide d'extraction selon la revendication 6, dans lequel l'épaississement du matériau est formé par des opérations de laminage d'une tôle dont est fait le rail médian (20) ou par des bandes de matériau appliquées sur celui-ci.

8. Guide d'extraction selon l'une des revendications 1 à 7, dans lequel les éléments de roulement en forme de rouleaux (41, 43, 44, 46, 47) et/ou les autres éléments de roulement en forme de rouleaux (51, 52) sont en forme de cylindres, de rouleaux sphériques, d'aiguilles ou de disques.

9. Guide d'extraction selon l'une des revendications 1 à 8, dans lequel est supporté sur le rail médian (20) au moins un rouleau d'appui rotatif (61, 62) qui coopère avec le rail de glissement (30).
